# DEMANDE DE BREVET EUROPEEN

(11) **EP 0 644 007 A1**
(43) Date de publication de la demande: **22.03.1995**
(21) Numéro de dépôt: 94402031.2
(22) Date de dépôt: 13.09.1994
(51) Int. Cl.: B23B 5/28

(54) **Procédé et dispositifs de mesure de roues de chemin de fer avant reprofilage**

(30) Priorité: 22.09.1993 FR 9311266
(71) Demandeur: NORD PRODUCTIQUE société anonyme, F-46400 Saint Cere (FR)
(72) Inventeur: Pioch, Michel, F-46400 Saint Cere (FR)
(74) Mandataire: Bernasconi, Jean

(57) **Abrégé**

On détermine, dans un système de référence dans lequel s'effectue le déplacement contrôlé de l'outil de reprofilage (5), la position axiale d'une face latérale de la roue, le diamètre de la roue et le profil usé de roue, pour en déduire le diamètre et le profil de roue après reprofilage, en plaçant, au voisinage immédiat d'un outil (5), un capteur sensible au contact entre la matière et l'outil, et à partir d'une position dudit outil proche de la roue, on rapproche lentement ledit outil de la roue pour réaliser un usinage jusqu'au moment où ledit capteur détecte le contact d'usinage sur un tour entier de la roue, le déplacement de dudit outil étant établi pour que, le premier contact dudit outil avec la roue (2) se fasse sensiblement sur la partie de surface de roue la plus proche de l'outil.

## Description

La présente invention a trait à un nouveau procédé de mesure et de préparation de roues de chemin de fer avant reprofilage, ainsi qu'à des dispositifs, c'est-à-dire des tours de reprofilage, permettant la mise en oeuvre de ce procédé.

Le reprofilage des roues usées de chemin de fer s'effectue sur des tours de reprofilage, sur lesquels on reprofile généralement, de façon plus ou moins simultanée, les deux roues d'une même bogie. On distingue classiquement deux types de tours de reprofilage, à savoir les tours dits double à portique dans lesquels l'essieu est pris en charge par deux poupées mobiles montées sur glissières, le réglage et l'usinage des profils demandés étant réalisé par deux chariots-trainards, équipés chacun d'une tête de mesure et d'un porte-outils, et les tours dits tours en fosse, qui comportent deux paires de galets qui viennent prendre en charge respectivement les deux roues du bogie et les entraînent en rotation, un bâti ou une poutre de guidage s'étendant entre les deux paires de galets pour recevoir le chariot d'usinage.

Avant de procéder aux opérations d'usinage qui constituent le reprofilage, et qui consistent à usiner le profil de roue, constitué par la table ou piste de roulement et le boudin, il est nécessaire, dans les tours modernes automatiques, de déterminer, d'une part, la position de la roue (ou des deux roues) dans l'espace par rapport au système de référence du tour, et d'évaluer, d'autre part, les défauts de la roue usée, telle que profil d'usure, faux-rond, plats, ou combinaisons de ces différents défauts. En effet, pour parvenir à un profil convenable, et qui soit parfaitement de révolution, après usinage, il est nécessaire de déterminer la surface enveloppe du profil usé, c'est-à-dire la surface susceptible de contenir intégralement le nouveau profil, après enlèvement de matière.
- Définition du voile ;
   classiquement le point de départ du profil usé, pour l'opération de reprofilage, est situé dans le plan de la face interne de la roue, c'est-à-dire la face présentant le boudin, en tenant compte du voile. On considère comme point de référence de la face interne le plan transversal à l'axe de l'essieu et passant par le point de défaut le plus interne, c'est-à-dire le sommet de la bosse si la roue est voilée (point le plus rapproché axialement de l'autre roue). Le voile est la distance axiale séparant le sommet de la bosse du fonds du creux.
- Définition du faux-rond ;
   la valeur du faux-rond est la distance comprise entre le point du profil usé le plus éloigné de l'axe de l'essieu et le point du profil usé le plus rapproché de l'axe de l'essieu sur un tour de roue. Cette valeur correspond à une profondeur de passe minimale pour usiner la roue sur toute la longueur de la circonférence.
- Définition de la largeur du boudin ;
   le profil-enveloppe de la roue doit être tel qu'il puisse également contenir un boudin ayant une largeur suffisante et il est donc nécessaire de contrôler que la largeur du boudin à réaliser correspond bien à une épaisseur suffisante de matière.
- Mesure du diamètre ;
   cette mesure est indispensable pour permettre l'égalisation des diamètres de chaque roue d'un même essieu, le diamètre peut se mesurer facilement à l'aide d'un curvimètre qui parcourt la circonférence au niveau du cercle de roulement.

Anciennement le reprofilage s'effectuait par une conduite manuelle du tour, les tours à commande numérique ayant d'ailleurs permis une approche plus rapide. Le tourneur vient tangenter avec l'outil sur la face interne puis sur la piste de roulement, le tourneur validant à chaque fois la position. Pour assurer une prise de passe minimum englobant le faux-rond, il pénètre dans la matière jusqu'à percevoir le bruit continu de l'outil pendant un tour complet de la roue. L'épaisseur du boudin est mesurée à l'aide d'un appareil de mesure spécial du genre pied à coulisse, et le diamètre est mesuré à l'aide d'un curvimètre.

Ces diverses oppérations manuelles sont longues et dépendent de l'habileté du tourneur.

On a donc déjà mis en oeuvre des systèmes de mesure utilisant des palpeurs qui palpent la roue usée pour procéder à des mesures permettant de déduire automatiquement la profondeur de passe. Ces dispositifs présentent cependant des inconvénients, notamment lorsque l'on cherche une certaine précision. En effet la position de la roue sur le tour est mal connue, surtout dans les tours à fosse, et la roue possède des défauts qui ne sont pas évalués. En outre la mesure du diamètre par le curvimètre est souvent inexacte, le curvimètre enregistrant une circonférence moyenne absorbant les plats, faux-ronds et défauts de surface. Les diamètres calculés des deux roues d'une même bogie ne correspondent donc pas forcément à la réalité, de sorte que la position de l'outil, pour assurer une première passe d'usinage est, en fait, aléatoire et il est normalement nécessaire de réaliser une deuxième passe après avoir mesuré le diamètre de chaque roue, pour équilibrer les valeurs des diamètres. En outre le profil qui sera usiné par l'outil, dépendra forcément des décalages possible entre les positions référencées du palpeur et de l'outil, ainsi que de l'état d'usure de l'outil lui-même. Enfin ces palpeurs, qui sont fragiles, sont localisés dans l'environnement agressif de l'outil d'usinage.

La présente invention se propose de remédier à ces inconvénients et de fournir un procédé de reprofilage de roues de chemin de fer permettant de réaliser automatiquement, et avec précision, le reprofilage d'une roue de chemin de fer usée.

Un autre objectif de l'invention est de réaliser en une seule passe la mise au diamètre identique des deux roues d'un même essieu.

Un autre objectif de l'invention est de fournir un tel procédé permettant un usinage de très grande précision sans être tributaire de variations dimensionnelles dues à l'usure de l'outil ou au positionnement de palpeurs.

Un autre objectif, encore, de l'invention est de fournir un dispositif de reprofilage d'une fiabilité élevée et ne nécessitant aucune maintenance.

L'invention a pour objet un procédé de mesure de roues de chemin de fer avant reprofilage, de préférence des deux roues calées ou montées folles sur un même essieu, procédé dans lequel on détermine, dans un système de référence dans lequel s'effectue le déplacement contrôlé de l'outil de reprofilage, la position axiale d'une face latérale de la roue, de préférence la face interne, le diamètre de la roue et le profil usé de roue, pour en déduire le diamètre et le profil de roue après reprofilage, caractérisé en ce que l'on place, au voisinage immédiat d'un outil, qui peut être l'outil de reprofilage lui-même ou bien un outil auxiliaire, un capteur sensible au contact entre la matière et ledit outil, et qu'à partir d'une position de dudit outil proche de la roue, on rapproche lentement cet outil de la roue pour réaliser un usinage jusqu'au moment où ledit capteur détecte le contact d'usinage sur un tour entier de la roue, le déplacement de rapprochement de cet outil étant établi, par rapport à la vitesse de rotation de la roue pour que, compte tenu du diamètre de la roue, le premier contact dudit outil avec la roue se fasse sensiblement sur la partie de surface de roue la plus proche, axialement ou radialement selon que l'avance de l'outil est axiale ou radiale.

De préférence le cycle de reprofilage de la roue est commencé par un rapprochement axial de l'outil vers la face latérale, notamment interne, de la roue avec un pas établi pour assurer une une première prise de contact sensiblement sur la partie axialement la plus proche de l'outil, c'est-à-dire la "bosse" dans le cas où la roue présente un voile. Dans ce mode de mise en oeuvre on peut avantageusement enregistrer le moment du contact et stopper l'avance pour définir ainsi la position axiale de la roue.

Le cas échéant, si l'on souhaite supprimer le voile, c'est-à-dire la déformation de la face interne de la roue hors de son plan théorique perpendiculaire à l'axe géométrique de l'essieu, on peut faire poursuivre l'avance de l'outil qui se met alors à usiner la matière jusqu'à ce que le capteur enregistre le contact permanent sur un tour entier de roue. On génère ainsi un point de référence déterminant un plan et l'on poursuit alors l'usinage de façon à supprimer la totalité de la matière située du côté interne de ce plan.

A partir du moment où la position axiale de la face interne de la roue a été définie et forme ainsi une position axiale de référence, on amène l'outil en face du profil pour une approche sensiblement radiale pas par pas, ou par a avance continue adaptée lente, de préférence au droit d'un point intermédiaire déterminé du profil situé sensiblement au milieu du profil et donc de l'épaisseur de la roue. Au moment où l'outil commence à entrer en contact avec la partie radialement la plus éloignée de l'axe du profil dans ce point déterminé, on détecte le contact et on enregistre la référence ainsi obtenue. On poursuit ensuite l'usinage par avance adaptée, pas à pas, ou continue, d'une rainure par rapprochement radial de l'outil jusqu'à enregistrer un contact d'usinage permanent sur un tour entier de roue. La course radiale ainsi déterminée entre le point de référence initiale et le point de contact permanent correspond à la valeur du faux-rond.

Le point déterminé peut être choisi ailleurs, en tout point de la longueur axiale du profil, de préférence dans la zone de la piste de roulement. L'opération peut être répétée en plusieurs, ou en un grand nombre de points déterminés.

Pour réaliser cet usinage de mesure on détecte, à chaque rotation de la roue, la fin du contact de l'outil avec la roue et l'on procède alors à l'avance de l'outil, par exemple par pas, jusqu'au moment où on détecte à nouveau un contact, auquel cas l'avance est arrêtée jusqu'à la détection d'une nouvelle perte de contact, qui entraîne une reprise de l'avance et ainsi de suite, jusqu'à ne plus détecter aucune perte de contact entre l'outil et la roue. Si le défaut est important, l'outil peut avancer de plusieurs pas pendant la période de perte de contact. On peut, de préférence, procéder à une avance par pas progressifs croissants, de façon à assurer un contact plus rapide, notamment lorsque la roue présente un plat important.

Dans le cas où on effectue le reprofilage sur un tour de reprofilage d'essieux montés, dit tour double à portique, la position finale de l'outil dans la rainure ainsi usinée dans le faux-rond peut déterminer de diamètre de la roue recherché après usinage.

Dans le cas de l'usinage sur un tour à fosse, sur lequel on ne connaît pas, dans le système de référence de l'outil, la position de l'axe de rotation de la roue, on introduit, dans la rainure réalisée par l'outil, un instrument de mesure de diamètre tel qu'un curvimètre à galet.

Dans l'un et l'autre cas, si l'on usine les deux roues d'un même essieu, il suffit de comparer les diamètres lus par le procédé selon l'invention sur chacune des deux roues pour définir le diamètre final des deux roues qui sera identique au plus petit diamètre détecté si l'on souhaite avoir deux roues d'essieux d'un diamètre identique.

Connaissant ainsi la position axiale de la roue et le diamètre recherché au point de mesure initial, il est alors facile, à partir de la courbe de profil théorique des roues de chemin de fer, de déterminer la profondeur de passe d'usinage au divers points du profil passant par ces points de référence et l'on peut alors positionner l'outil aux différents points particulier du profil et procéder à l'usinage complet de la roue.

En outre, selon le perfectionnement de l'invention, on peut détecter pendant l'usinage de chaque point si, en arrivant à la position finale d'usinage calculé, il y a eu contact permanent sur un tour de roue entier. Dans la négative on peut poursuivre l'usinage dans la position particulière en question jusqu'à obtenir ce contact permanent et redéfinir ainsi une nouvelle profondeur d'usinage pour obtenir finalement un profil parfaitement de révolution.

De préférence, après avoir procédé à la détermination du faux-rond et du diamètre de la roue comme précité en un point central, on positionne l'outil tout d'abord en face du boudin de roue et l'on rapproche l'outil, par exemple pas à pas en incrémentant la profondeur de passe jusqu'au contact, ou bien par avance continue jusqu'au contact, ce qui permet de vérifier la position du boudin. Le cas échéant on peut également procéder à l'usinage du boudin pour assurer le contact de l'outil en tout point du profil. On conçoit qu'afin d'optimiser le temps d'approche de l'outil, ainsi qu'éventuellement le temps d'usinage, la durée du pas et la valeur de l'incrément, c'est-à-dire du déplacement de l'outil entre deux pas consécutifs ou bien la vitesse d'avance continue, vont dépendre du diamètre de la roue, de la vitesse de rotation de la roue sur le tour et de la précision recherchée.

Pour la mise en contact sur la face interne afin de déterminer le point de référence axial, on peut utiliser, par exemple, une avance par incréments identiques.

Cependant il est préférable, notamment afin de tenir compte de faux-ronds avec plats, de prévoir une avance progressive par exemple par augmentation progressive du pas et remise à la valeur initiale du pas après chaque passage du plat.

L'outil assurant la mesure de la roue, conformément à l'invention, peut être l'outil de reprofilage lui-même. Cependant, notamment dans le cas de défauts de roue très importants, nécessitant une plongée importante de l'outil dans la matière, on préfère utiliser un outil auxiliaire, proche de l'outil de reprofilage, et de préférence radialement mobile par rapport à ce dernier, entre une position de mesure, rapprochée de l'axe de la roue, par rapport à l'outil de reprofilage, et une position rétractée plus éloignée.

L'utilisation d'un tel outil auxiliaire peut engendrer une faible imprécision, généralement acceptable, de la position de l'outil de reprofilage par rapport au profil théorique recherché. Cette imprécision peut être éliminée, par exemple en faisant usiner par l'outil auxiliaire, une légère portée à l'extrémité du profil de roue éloignée du boudin, après quoi on amène l'outil de reprofilage à tangenter cette butée, par une avance conforme à l'invention, ce qui assure alors un repérage précis de l'outil de reprofilage.

L'invention a également pour objet les tours de reprofilage permettant la mise en oeuvre du procédé de l'invention et qui se caractérisent par le fait qu'ils présentent, au voisinage immédiat de l'outil, un capteur sensible au contact entre l'outil et la matière de la roue et des moyens de calcul sensibles aux signaux provenant dudit capteur pour détecter la présence ou l'absence de contact sur un tour entier de roue. Dans une forme de réalisation particulière le capteur peut être un capteur du type accéléromètre, notamment un capteur de vibrations accoustiques.

On peut également utiliser un capteur captant les efforts sur l'outil qui permet de mieux enregistrer les périodes d'enlèvement de matière, et, également, d'utiliser ce capteur pour moduler la puissance utile pendant l'usinage.

De préférence le capteur est positionné entre l'outil proprement dit et le porte-outil.

Dans une forme de réalisation de l'invention, le tour peut comporter, comme outil de mesure, un outil auxiliaire, monté sur un support rétractable, à proximité de l'outil de reprofilage, le capteur étant alors associé audit outil rétractable auxiliaire, étant entendu qu'un capteur peut également être associé à l'outil de reprofilage.

Du fait de la suppression de la tête de mesure qui équipait la machine, il est possible d'adapter un outil supplémentaire qui écrête le boudin systématiquement pendant le parcours de l'outil de reprofilage, ceci sans modifier les courses de déplacement des chariots traînards.

Cet outil est judicieusement placé de façon à ce que l'écrêtage du boudin soit réalisé au moment où l'outil de reprofilage usine dans la zone où la section de copeau enlevée est la plus faible.

L'écrêtage du boudin peut dans certains cas améliorer les performances de la machine permettant des vitesses de coupe et d'avance plus rapides, du fait de la diminution des sections des copeaux.

De préférence, pour l'usinage simultané de deux roues sur un même essieu, le tour comporte deux outils avec leurs dispositifs porte-outils, un pour chaque roue, et l'on procède simultanément aux mesures sur les deux roues de l'essieu, les moyens usuels de calcul du tour de reprofilage prenant en compte le traitement des données de façon interactive pour l'usinage des deux roues.

Les moyens de calcul sont sensibles aux signaux provenant du ou des capteurs et sont agencés de façon à discriminer l'existence ou l'absence d'un contact entre l'outil et la roue à reprofiler. Cette détection de la présence ou de l'absence d'un contact est suffisante dans une version de base de l'invention. Cependant on peut également prévoir plusieurs seuils de discrimination, notamment dans le cas où l'on utilise un capteur d'efforts de façon à pouvoir distinguer l'absence de contact, la présence d'un simple contact, et l'usinage d'une épaisseur substantielle de matière. Les moyens de calcul sont également agencés de façon à recevoir ou contenir l'information relative à la durée d'un tour entier de deux roues. Par ailleurs les moyens de calcul sont agencés pour contenir en mémoire une, ou éventuellement plusieurs formes de profil théorique de roue.

D'une façon générale les moyens de calcul peuvent consister dans les moyens de calcul habituel d'un tour à commande numérique, l'agencement particulier à l'invention des moyens de calcul consistant alors en un logiciel. Ce logiciel est avantageusement conçu pour les opérations suivantes :
- première approche de l'outils vers la face interne de la roue par un cycle ordinaire de commande numérique ;
- à partir d'un point choisi pour ne pas risquer un contact avec une roue très voilée, poursuite de l'approche de l'outil par pas successifs, ou avance lente ;
- au moment du contact avec la roue, détection du signal et repérage des coordonnées de ce point ;
- éventuellement (si le logiciel est prévu pour assurer l'usinage de la face interne) poursuite de l'avance lente pas à pas, ou continue, jusqu'à enregistrement du contact permanent sur tout un tour de roue et enregistrement, à ce moment, du point de référence correspondant et détermination du voile ;
- éventuellement cycle d'usinage complet de ladite face interne de roue ;
- écartement de l'outil et déplacement de celui-ci jusqu'au droit radial d'un point médian du profil à une distance suffisante pour éviter un contact, même avec une roue non usée, ce déplacement s'effectuant par un cycle de commande numérique ;
- poursuite de l'approche radiale pas à pas ou par avance lente ;
- au moment du contact, détermination du point de référence correspondant ;
- poursuite de l'avance pas à pas ou continue lente avec éventuellement usinage d'une gorge ou rainure dans un faux-rond ;
- détection de la présence d'un contact permanent sur un tour entier de roue et enregistrement de cette position, ou de la course correspondant à la valeur du faux-rond ;
- contrôle du diamètre de la roue, soit par calcul à partir de la position finale précédente, soit à l'aide d'un curvimètre, notamment dans le cas d'un tour en fosse ;
- détermination par le calcul, à partir du profil théorique de roue, du profil de reprofilage (incluant ou non le boudin) ;
- usinage (par exemple par cycles de commande numérique) du profil ainsi déterminé ;
- cet usinage pouvant être éventuellement effectué pas à pas ou par avance continue lente avec vérification de la détection de contact permanent au moment où on obtient le diamètre minimal ;
- les informations relatives au diamètre, et par conséquent au calcul du profil, étant prises en compte pour les deux roues de façon à obtenir des profils de reprofilage identiques sur deux roues reprofilées avec un diamètre identique.

L'invention présente ainsi de nombreux avantages. Tout d'abord on obtient une détermination précise du profil usé permettant de réaliser simultanément, en une seule passe d'usinage, les deux roues d'un même essieu, sans avoir à tenir compte d'une compensation due à une usure de l'outil ni d'une dispersion de cote entre l'outil et un palpeur. On peut également lire directement le diamètre de roue pré-usiné par l'outil après un enlèvement minimum de matière.

La fiabilité est accrue et la maintenance diminuée puisqu'aucune pièce mécanique de palpage n'est présente aucun mouvement ne s'effectuant au voisinage de l'outil. Le capteur est avantageusement encastré dans le porte-outil et se trouve à l'abri des copeaux et des pièces en mouvement. Aucun réglage n'est nécessaire. La mesure est particulièrement rapide, aucune tête de mesure n'ayant à être présentée. Seul dans le cas d'un tour en fosse, il sera nécessaire de prévoir un simple curvimètre.

L'invention permet également un contrôle direct du bris d'outil le capteur détectant soit une absence brusque d'usinage soit un arrachage du métal.

Dans le cas des tours en fosse il peut se produire une rupture d'adhérence entre les galets et les roues, qu'ils entraînent par friction, de sorte que les galets glissent et n'entraînent plus la roue. Grâce à l'invention on obtient, dans un tel cas, une modification du signal capté et l'on peut par exemple agir sur les vitesses d'avance respective des outils pour diminuer l'effort anatagoniste et permettre à nouveau l'entraînement normal.

D'autres avantages et caractéristiques de l'invention apparaîtront à la lecture de la description suivante, faite à titre d'exemple non limitatif, et se référant au dessin annexé dans lequel :
- la figure 1 représente le profil d'une roue à reprofiler ;
- la figure 2 représente schématiquement une valeur de voile et une valeur de faux-rond sur un profil ;
- les figures 3 à 9 représentent les diverses phases des mouvements de l'outil jusqu'à la détermination du profil de reprofilage à usiner ;
- les figures 10 et 11 représentent schématiquement la position du capteur près de I'outil ;
- la figure 12 représente schématiquement les signaux obtenus pendant les différentes phases ;
- les figures 13 et 14 représentent les étapes d'usinage partiel pour des pistes de galet d'entraînement pour un tour en fosse ;
- les ligures 15 à 24 représentent diverses étapes de mesure et de reprofilage par un tour selon une variante de l'invention.

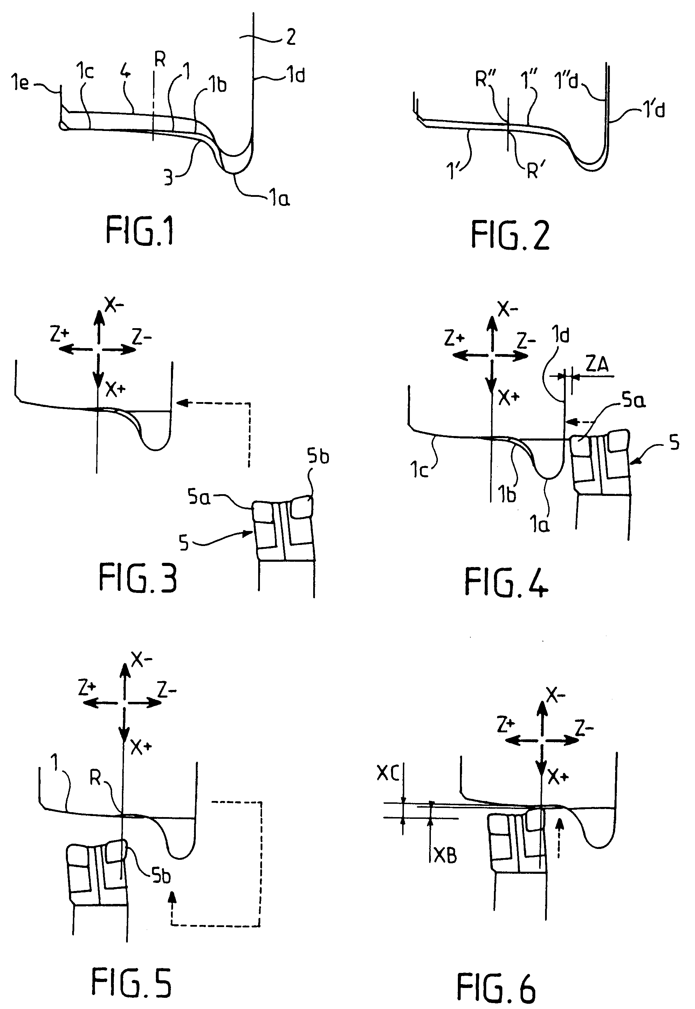

En se référant tout d'abord aux figures 1 à 10 on va décrire un mode de mise en oeuvre de l'invention effectué sur un tour de reprofilage susceptible de reprofiler simultanément les deux roues portées par un même essieu. Ces roues peuvent être, le cas échéant, solidaires de l'essieu ou montées folles sur des fusées d'essieu. Des tours de reprofilage du type double à portique ou du type tour en fosse sont bien connus de l'homme de l'art spécialiste du reprofilage des roues de chemin de fer et n'ont donc pas à être décrits. Il est simplement rappelé qu'un tour double à portique est composé d'un bâti, de deux poupées mobiles montées sur glissières avec des plateaux équipés chacun de griffes permettant le serrage de l'essieu, ces tours comportant encore deux chariots-trainards équipés chacun d'une tête de mesure et d'un porte-outil. De tels tours sont par exemple commercialisés par la Société Nord Productique, demeurant 59620 Le Val-Sur-Sambre - Aulnoy- Aymeries, France. Quant au tour en fosse, il comporte deux socles porte-bras et des moyens de guidage destinées à recevoir un ou des chariot d'usinage de façon à présenter, pour chaque roue de l'essieu, une paire de galets montés à l'extrémité des deux bras d'un même socle porte-bras. Ces tours sont également commercialisées par la même Société Nord Productique précitée.

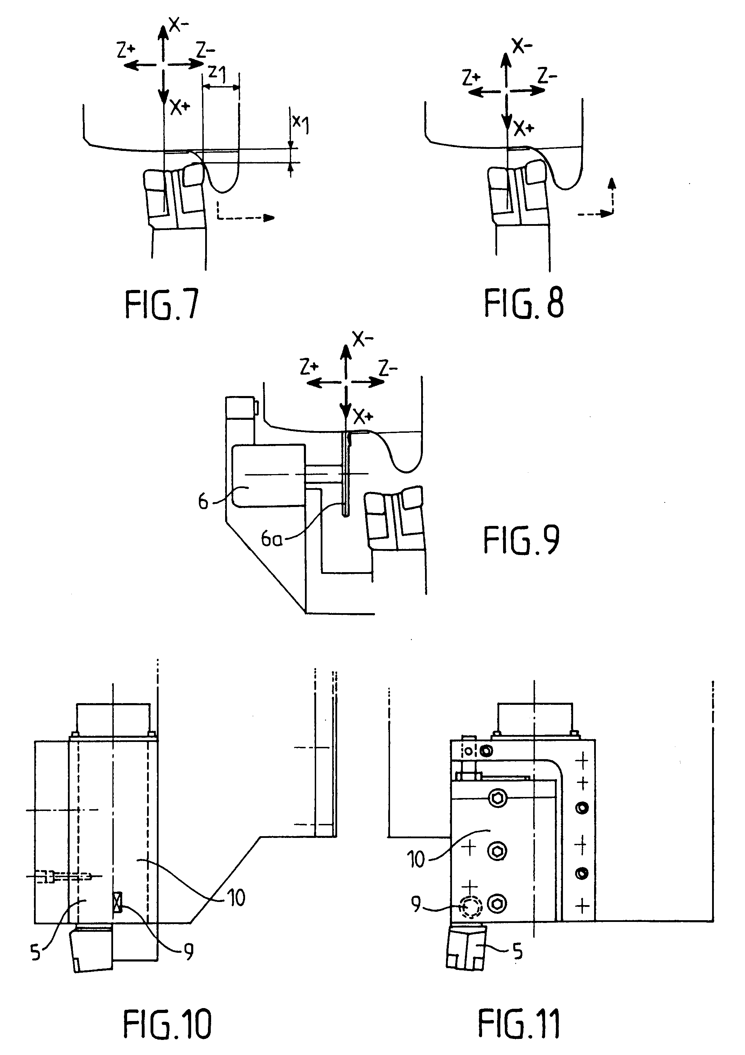

Conformément à l'invention, l'outil est associé à un capteur de vibrations et/ou un capteur d'effort. On a représenté sur les figures 10 et 11 le montage schématique du capteur 9, situé entre l'outil 5 et le porte-outil 10, pour être sensible à l'effort ou aux vibrations transmis de l'outil au porte-outil.

Le capteur peut être, par exemple, un accélérateur de 2 g à 5 000 g de type piézoresistif ou un capteur de force à cristal de quartz. De tels capteurs sont courants dans le commerce (capteur EGCS de la société Entran, Les Clays-sous-Bois, 78340 France ou société KISTLER, Winterthur CH - 8408 Suisse).

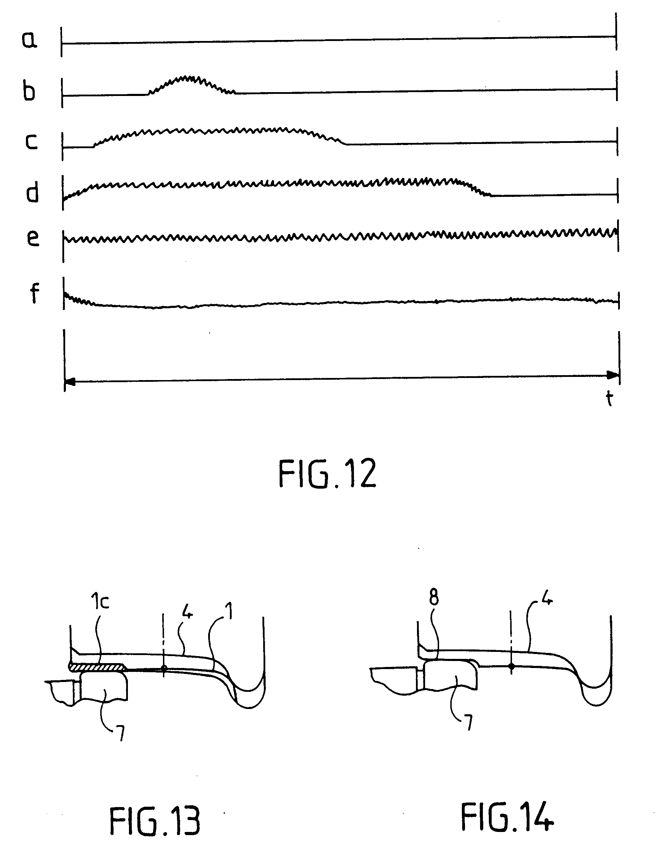

En se référant à la figure 12 on voit un diagramme simplifié montrant le signal électrique engendré par le capteur pendant un tour de roue complet, ce signal étant adressé aux moyens de calcul du tour, par exemple un ordinateur.

La courbe a, plate, correspond à l'absence de tout contact entre l'outil et la roue ; sur la courbe b on voit, sur une partie de la rotation, apparaître un signal correspondant à un contact et un usinage ponctuel par exemple sur un faux-rond ou sur une bosse ; la courbe c correspond au signal détecté lorsque la longueur d'usinage croît, l'outil se rapprochant de l'axe de rotation ; la courbe d correspond à une longueur d'usinage encore accrue mais laissant une partie non usinée pendant la rotation ; la courbe e montre le signal obtenu lorsque l'usinage est permanent sur un tour entier de roue ; la courbe f montre le signal obtenu après usinage en cas d'arrêt de l'avance, l'outil restant sur place.

En se référant à la figure 1 on voit le profil 1 d'une roue de chemin de fer 2 usée. Ce profil comporte un boudin 1a, et une piste de roulement avec une zone centrale 1b, s'étendant depuis le boudin central et dépassant le point R médian de la roue, zone dans laquelle l'usure est importante tout en décroissant vers la face externe de la roue, et une zone 1c, proche de la face externe et qui a été peu ou pas usée.

On a représenté en 1d la face interne et en 1e la face externe de la roue. On a également représenté sur la figure, en 3, le profil de la roue neuve avant usure. On voit que si le boudin 1a a conservé son diamètre maximal, il a notablement perdu de son épaisseur.

Le point de départ du profil usé ou après reprofilage est toujours situé dans le plan de la face interne 1d de la roue en tenant compte du défaut de voile.

En se référant à la figure 2 on a illustré les défauts géométriques d'une roue présentant d'une part un voile et d'autre part un faux-rond, et on a représenté par 1' la section du profil usé la plus éloignée de l'axe de l'essieu et par 1'' la section du profil usé la plus rapprochée de l'axe d'essieu. On comprend que le profil après usinage doit être inscrit dans le profil 1''. Du côté de la face interne 1d, on voit qu'il existe un voile, c'est-à-dire une variation axiale de la face interne, le voile étant défini par l'écart axial entre la bosse 1'd et le creux 1''d. On prend de préférence dans l'invention, comme point de référence, le plan passant par la bosse. On prend comme point de départ de la profondeur d'usinage le point situé sur le cercle de roulement usé le plus éloigné de l'axe de rotation de l'essieu qui est de préférence le point R', la valeur du faux-rond étant défini par l'écart radial entre le point R' et le point R'' du profil 1''. Cette valeur correspond à la profondeur de passe minimum pour "blanchir" la roue sur toute sa circonférence.

On se réfère maintenant aux figures 3 à 8.

La roue 2 est montée sur un tour et mise en rotation à une vitesse, par exemple de 20 tours/mn. L'outil 5 du tour est un outil usuel de reprofilage de roue de chemin de fer et présente, par exemple, deux plaquettes d'outil 5a, 5b. L'outil peut être déplacé, par rapport à la roue qui tourne, dans deux directions radiale X et axiale Z du plan. Le logiciel du tour à commande numérique procède d'abord à un déplacement de l'outil dans le sens de la flèche représentée sur le dessin, tout d'abord en X puis en Z jusqu'à ce que l'outil se trouve au droit de la face interne 1d, à peu près au niveau du profil. La position finale d'avance continue par commande numérique est à peu près à 1 cm en direction Z de la face 1d de la roue. A partir de cette position l'outil continue de se rapprocher de la roue dans la direction Z mais cette fois ci par pas constants. (En variante, l'avance par pas peut être remplacée par une avance continue lente de vitressse correspondante). L'avance est réglée en fonction de la vitesse de rotation de la roue pour que l'outil prenne contact, par sa plaquette 5a, nécessairement avec la partie la plus interne de la face 1d, c'est-à-dire la bosse en cas de voile. Au moment du contact le capteur associé à l'outil envoie un signal tel que celui représenté sur la courbe b de la figure 10. A ce moment le logiciel stoppe l'avance et la position ZA atteinte est enregistrée.

L'outil est alors positionné en suivant un déplacement schématisé par la flèche sur la figure 5, de façon que la pointe de la plaquette 5b se trouve située en face du point R du profil 1 de la roue usée. Le logiciel amène en fait l'outil à une distance de quelques millimètres du profil théorique (profil avant usure) de façon à éliminer toute interférence au cas où une roue non usée aurait été placée sur le tour. A partir de cette position, représentée sur la figure 5, l'outil est déplacé en position X vers le profil de roue par une avance par pas (ou continue lente). A un certain moment l'outil prend contact avec la piste de roulement sensiblement à l'emplacement de la circonférence où le profil est le plus loin de l'axe de l'essieu, l'avance étant réglée en fonction de la vitesse de la roue pour tangenter sur la piste de roulement à son plus grand rayon, en cas de faux-rond. Un signal analogue à celui de la courbe b de la figure 10 provient du capteur qui stoppe l'avance et la position XB de l'outil est enregistrée.

Si le capteur ne détecte pas un contact permanent sur un tour de roue on en déduit automatiquement un faux-rond ou un plat sur la piste de roulement. Le cycle se poursuit pas à pas (ou par avance lente) pour déterminer la valeur du défaut, jusqu'à ce que le capteur délivre un signal complet sur un tour de roue entier, correspondant à la courbe e de la figure 10. A ce moment l'outil s'arrête et la position atteinte XC est enregistrée.

Les moyens de calcul du tour sont alors en possession de tous les éléments qui définissent la valeur minimale de la profondeur de passe pour usiner la roue en supprimant les défauts de la piste de roulement.

Il est alors préférable de vérifier que le profil d'usinage à exécuter s'inscrit correctement dans le profil 1 de la roue usée. Pour cela on peut alors facilement positionner l'outil en divers endroits et contrôler si l'outil entame bien la matière ou non.

On préfère que le premier point à définir corresponde à l'épaisseur du boudin. Pour cela on amène l'outil dans la position représentée sur la figure 7 en un point positionné en coordonnées x1 et z1 (x1 étant mesuré en X par rapport à la position XC et z1 par rapport à la position ZA), point qui correspond au point théorique du profil (au niveau du boudin) qui serait usiné si l'on usine le profil calculé lors de la phase précédente. Si alors le capteur enregistre l'enlèvement de matière de façon continue pendant un tour entier de roue, la profondeur de passe est considérée comme suffisante.

Si au contraire le capteur ne détecte pas un contact permanent sur un tour de roue au point x1, z1, le logiciel déplace radialement, par pas ou de façon continue, l'outil en direction X jusqu'à ce que le capteur détecte le contact permanent pendant un tour de roue.

A ce moment l'outil s'arrête et le logiciel détermine un nouveau profil d'usinage situé plus près de l'axe de l'essieu que le profil calculé précédemment.

Le profil à usiner étant déterminé il reste à déterminer le diamètre de la roue. Si le tour est un tour de type double à portique, le diamètre peut être déterminé par calcul puisque l'axe de l'essieu, qui est confondu avec l'axe du tour, est connu.

Si au contraire le tour est un tour du type tour à fosse, on vient appliquer, comme on le voit sur la figure 9, dans la rainure déterminée par l'outil au point R, le galet 6a d'un curvimètre 6 qui lit la circonférence d'un sillon décrit dans la roue par l'outil lors de la détermination de la profondeur de passe (on doit noter que si la profondeur de passe ne correspond pas à celle déterminée par la position XC, mais a du être augmentée par détermination d'un nouveau profil d'usinage lors de l'opération de vérification représentée sur les figures 7 et 8, le diamètre réel de roue n'est pas identique au diamètre mesuré par le curvimètre mais doit être diminué de la profondeur de passe supplémentaire entre le premier profil théorique d'usinage déterminé et le profil d'usinage définitif.

Une fois le diamètre déterminé, on le compare au diamètre déterminé pendant les opérations similaires sur l'autre roue de l'essieu et le profil définitif à usiner, sur les deux roues, est celui correspondant à la roue ayant le plus petit diamètre.

Lorsque toutes ces opérations ont été effectuées les moyens de calcul à commande numérique du tour ont enregistré toutes les données et peuvent alors procéder aux divers calculs usuels permettant, selon les options, de choisir le nombre de passes, la section du copeau, les opérations d'ébauche (écrêtage du boudin, enlèvement de la saillie, etc.). A partir de ce moment l'opération d'usinage complète aboutissant au reprofilage peut commencer pour chacune des roues.

En cas d'avance continue au lieu d'avance par pas, la vitesse de l'avance peut également être progressive pour obtenir un résultat simulaire.

On se réfère maintenant aux figures 11 et 12.

Dans le cas de l'usinage sur tour en fosse, il y a intérêt à ce que les deux galets d'entraînement de chaque roue portent en continu sur la roue. Lorsque les bras porte-galets du tour sont monobloc les défauts tels que les plats sur les tables de roulement des roues font que les galets perdent le contact avec la roue à chaque passage. Si les bras sont indépendants on peut éviter cette perte de contact mais la nécessité de rendre les deux bras solidaires pendant la période de centrage entraîne des complications de montage.

On peut alors, grâce à l'invention, procéder également à une détermination d'un éventuel défaut dans la zone peu ou pas usée du profil de roue, qui correspond à la zone 1c la plus externe. Si on détecte alors un plat ou un faux-rond important, l'outil usine dans cette zone une portée 8 pour les galets de tour 7. La zone 1c dans laquelle l'usinage s'effectue étant en général très peu usée, la zone usinée de portée 8 s'inscrit à l'intérieur de la matière à enlever pour aboutir au profil 4 après reprofilage.

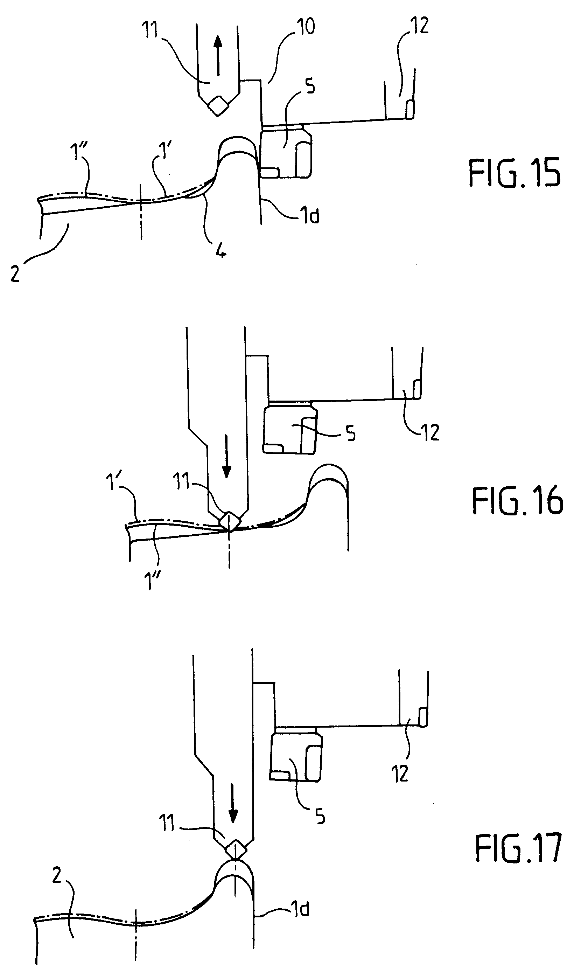

On se réfère à la figure 15 et aux figure suivantes.

Dans cette forme de réalisation le porte-outil 10, qui porte l'outil de reprofilage 5, supporte, de façon radialement coulissante, un outil auxiliaire 11 représenté, sur la figure 15, dans sa position rétractée. Comme on le voit la plaquette de l'outil 11 présente un sommet aigü lui permettant d'usiner des rainures profondes dans la roue.

En outre le porte-outil 10 présente, du côté de l'outil 5 opposé à celui muni de l'outil coulissant 11, un outil supplémentaire 12 permettant l'écrêtage du boudin 1a.

Le fonctionnement est le suivant :
- le porte-outil ayant été amené a proximité de la roue, une avance axiale lente permet à l'une des plaquettes de l'outil 5 de venir au contact de la face interne 1d de la roue, déterminant ainsi la position axiale, comme cela a été décrit précédemment. Le porte-outil est alors amené dans sa position représentée sur la figure 16 et l'outil auxiliaire mobile 11 est alors rapproché avec une avance lente, continue, ou de préférence pas à pas jusqu'au contact de la roue, dans lequel il creuse une rainure jusqu'au moment où il reste en contact avec la partie (1'') du profil la plus proche de l'axe de la roue, ce qui détermine la profondeur d'usinage. Ensuite, de la même façon, l'outil auxiliaire 11, comme on le voit sur la figure 17 peut effectuer des mesures similaires en différents points du profil. A partir de ce moment les moyens de calcul de dispositif calculent le profil 4 de reprofilage à usiner.

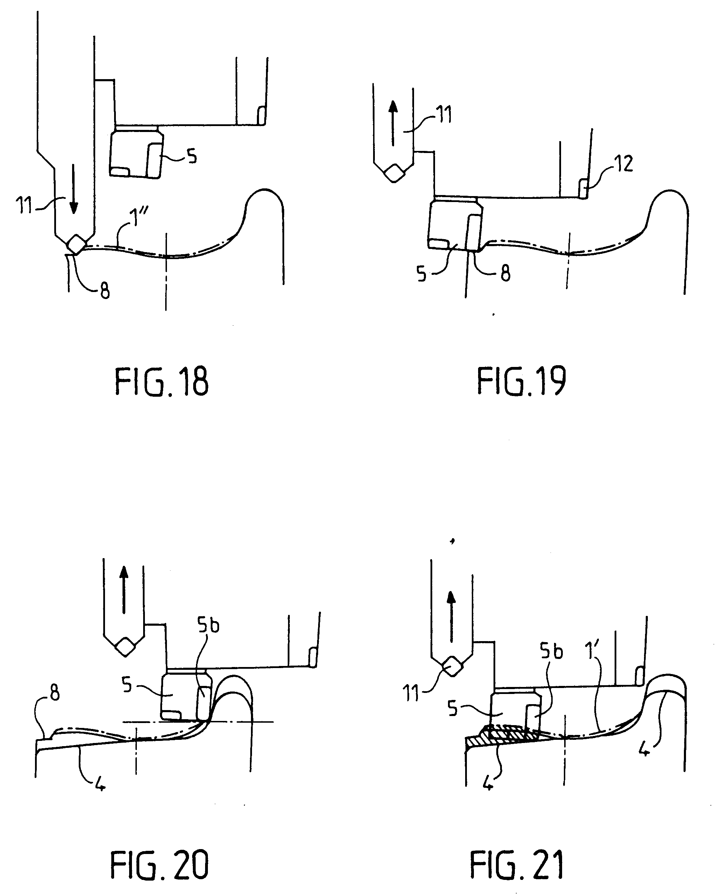

De façon avantageuse le chariot peut ensuite être déplacé, comme le montre la figure 18, pour que l'outil 11 réalise, sur le bord externe, l'usinage d'une portée 8 (qui peut d'ailleurs être également utilisée pour un bon entraînement par les galets d'un tour en fosse), portée 8 dont le diamètre est alors connu. On rétracte ensuite l'outil 11 et, comme représenté sur la figure 19 on amène l'outil 5 par une avance lente, de préférence pas à pas, jusqu'au contact de la portée 8. Ceci détermine alors une position exacte de l'outil 5 même en cas de variation de la différence des cotes nominales entre les outils 5 et 11, due par exemple à l'usure.

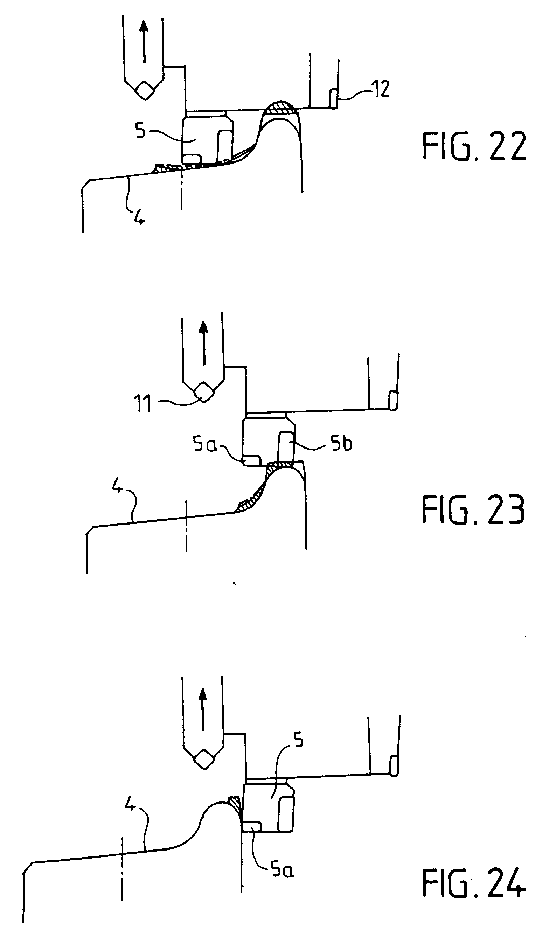

A partir de ce moment on peut procéder à des opérations de mesure axiales en utilisant l'outil 5, comme le montre la figure 20. Le profil de reprofilage 4 peut alors être complètement calculé et l'on procède alors à l'usinage proprement dit, l'outil 5 de reprofilage enlevant toute la matière nécessaire (figure 21). Lorsque l'outil de reprofilage arrive sensiblement au milieu de la roue, par exemple l'endroit où il a réalisé sa première rainure, comme représenté sur le dessin, l'outil d'écrêtage 12 peut écrêter le boudin 1a, après quoi l'outil 5 continue son mouvement d'usinage (figure 22 et 23). A la fin de l'opération, comme le montre la figure 24, la plaquette externe 5a de l'outil vient assurer la finition de la face interne du boudin.

## Revendications

1. Procédé de mesure de roues de chemin de fer avant reprofilage, de préférence des deux roues calées ou montées folles sur un même essieu, procédé dans lequel on détermine, dans un système de référence dans lequel s'effectue le déplacement contrôlé de l'outil de reprofilage, la position axiale d'une face latérale de la roue, de préférence la face interne, le diamètre de la roue et le profil usé de roue, pour en déduire le diamètre et le profil de roue après reprofilage, caractérisé en ce que l'on place, au voisinage immédiat d'un outil, un capteur sensible au contact entre la matière et l'outil, et qu'à partir d'une position dudit outil proche de la roue, on rapproche lentement ledit outil de la roue pour réaliser un usinage jusqu'au moment où ledit capteur détecte le contact d'usinage sur un tour entier de la roue, le déplacement de rapprochement dudit outil étant établi, par rapport à la vitesse de rotation de la roue pour que, compte tenu du diamètre de la roue, le premier contact dudit outil avec la roue se fasse sensiblement sur la partie de surface de roue la plus proche de l'outil, axialement ou radialement selon que l'avance dudit outil est axiale ou radiale.

2. Procédé selon la revendication 1, caractérisé en ce que l'avance lente est réalisée pas à pas, de préférence par pas progressifs.

3. Procédé selon l'une des revendications 1 et 2 caractérisées par un rapprochement axial dudit outil vers la face latérale, notamment interne, de la roue avec une avance établie pour assurer une une première prise de contact sensiblement sur la partie axialement la plus proche de l'outil, et enregistrer le moment du contact pour définir ainsi la position axiale de la roue.

4. Procédé selon la revendication 3, caractérisé par le fait que l'on poursuit l'avance de l'outil qui se met alors à usiner la matière jusqu'à ce que le capteur enregistre le contact permanent sur un tour entier de roue, générant ainsi un point de référence déterminant un plan, et l'on poursuit alors l'usinage de façon à supprimer la totalité de la matière située du côté interne de ce plan.

5. Procédé selon l'une des revendications 1 à 4 caractérisé en ce qu'à partir du moment où la position axiale de la face interne de la roue a été définie et forme ainsi une position axiale de référence, on amène l'outil en face du profil pour une approche lente sensiblement radiale, de préférence au droit d'un point intermédiaire déterminé du profil situé sensiblement au milieu du profil, on détecte le contact au moment où l'outil commence à entrer en contact avec la partie radialement la plus éloignée de l'axe du profil dans ce point déterminé, on poursuit ensuite l'usinage pas à pas d'une rainure par rapprochement radial de l'outil jusqu'à enregistrer un contact d'usinage permanent sur un tour entier de roue.

6. Procédé selon l'une des revendications 1 à 5 utilisant un tour de reprofilage d'essieux montés, dit tour double à portique, caractérisé en ce que l'on utilise la position finale de l'outil dans la rainure ainsi usinée dans le faux-rond pour déterminer le diamètre de la roue recherché après usinage.

7. Procédé selon l'une des revendications 1 à 5 utilisant un tour en fosse, caractérisé en ce qu'on introduit, dans la rainure réalisée par l'outil, un instrument de mesure de diamètre tel qu'un curvimètre à galet.

8. Procédé selon l'une des revendications 1 à 6 caractérisé en ce que l'on compare les diamètres sur chacune des deux roues d'un même essieu pour définir le diamètre final des deux roues qui sera identique au plus petit diamètre détecté.

9. Procédé selon l'une des revendications 1 à 8 caractérisé en ce que l'on détermine, par les moyens de calcul du tour, à partir de la courbe de profil théorique des roues de chemin de fer, la profondeur de passe d'usinage au divers points du profil passant par les points de référence puis que l'on procède à l'usinage complet de la roue.

10. Procédé selon la revendication 9 caractérisé en ce que l'on détecte, pendant l'usinage de chaque point, si, en arrivant à la position finale d'usinage calculée, il y a eu contact permanent sur un tour de roue entier, faute de quoi on poursuit l'usinage dans la position particulière en question jusqu'à obtenir ce contact permanent et redéfinir ainsi une nouvelle profondeur d'usinage correspondant à un nouveau profil à usiner.

11. Procédé selon l'une des revendications 9 et 10 caractérisé en ce qu'après avoir procédé à la détermination du faux-rond et du diamètre de la roue en un point central, on positionne l'outil tout d'abord en face du boudin de roue et l'on rapproche l'outil pas à pas en incrémentant la profondeur de passe jusqu'au contact, ce qui permet de vérifier la position du boudin.

12. Procédé selon l'une des revendications 1 à 11 utilisant un tour de reprofilage en fosse, caractérisé en ce que l'on effectue une détermination d'un éventuel défaut dans la zone peu ou pas usée du profil de roue, qui correspond à la zone (1c) la plus externe, et si on détecte alors un plat ou un faux-rond important, l'outil usine dans cette zone une portée (8) pour les galets de tour (7).

13. Procédé selon l'une des revendications 1 à 12, caractérisé en ce que ledit outil destiné à être rapproché pour la mesure, est l'outil de reprofilage (5).

14. Procédé selon l'une des revendications 1 à 12, caractérisé en ce que ledit outil destiné à être rapproché pour la mesure, est un outil (II), déplaçable à proximité de l'outil de reprofilage (5)

15. Procédé selon la revendication 14, caractérisé en ce que l'on usine, avec ledit outil auxiliaire, une portée (8) destinée ensuite à être contactée par l'outil de reprofilage pour un positionnement radial de celui-ci.

16. Tours de reprofilage permettant la mise en oeuvre du procédé selon l'une des revendications 1 à 15 et qui se caractérisent par le fait qu'ils présentent, au voisinage immédiat de l'outil, un capteur sensible au contact entre l'outil et la matière de la roue et des moyens de calcul sensibles aux signaux provenant dudit capteur pour détecter la présence ou l'absence de contact sur un tour entier de roue.

17. Tour selon la revendication 16 caractérisé en ce que le capteur est un capteur du type accéléromètre ou bien un capteur de vibrations, ou un capteur d'efforts.

18. Tour selon l'une des revendications 16 et 17 caractérisé en ce que le capteur est positionné entre l'outil proprement dit et le porte-outil.

19. Tour selon l'une des revendications 16 à 18, caractérisé en ce que les moyens de calcul sont agencés pour les opérations suivantes :
- première approche de l'outils vers la face interne de la roue par un cycle ordinaire de commande numérique ;
- à partir d'un point choisi pour ne pas risquer un contact avec une roue très voilée, poursuite de l'approche de l'outil par pas successifs ;
- au moment du contact avec la roue, détection du signal et repérage des coordonnées de ce point ;
- éventuellement (si le logiciel est prévu pour assurer l'usinage de la face interne) poursuite de l'avance pas à pas jusqu'à enregistrement du contact permanent sur tout un tour de roue et enregistrement, à ce moment, du point de référence correspondant et détermination du voile ;
- éventuellement cycle d'usinage complet de ladite face interne de roue ;
- écartement de l'outil et déplacement de celui-ci jusqu'au droit radial d'un point médian du profil à une distance suffisante pour éviter un contact, même avec une roue non usée, ce déplacement s'effectuant par un cycle de commande numérique ;
- poursuite de l'approche radiale pas à pas ;
- au moment du contact, détermination du point de référence correspondant ;
- poursuite de l'avance pas à pas avec éventuellement usinage d'une gorge ou rainure dans un faux-rond ;
- détection de la présence d'un contact permanent sur un tour entier de roue et enregistrement de cette position, ou de la course correspondant à la valeur du faux-rond ;
- contrôle du diamètre de la roue, soit par calcul à partir de la position finale précédente, soit à l'aide d'un curvimètre, notamment dans le cas d'un tour en fosse ;
- détermination par le calcul, à partir du profil théorique de roue, du profil de reprofilage (incluant ou non le boudin) ;
- usinage (par exemple par cycles de commande numérique) du profil ainsi déterminé ;
- cet usinage pouvant être éventuellement effectué pas à pas avec vérification de la détection de contact permanent au moment où on obtient le diamètre minimal ;
- les informations relatives au diamètre, et par conséquent au calcul du profil, étant prises en compte pour les deux roues de façon à obtenir des profils de reprofilage identiques sur deux roues reprofilées avec un diamètre identique.

20. Tour selon l'une des revendications 16 à 19, caractérisé en ce qu'il comporte, au voisinage du porte-outil de reprofilage, un outil auxiliaire (11) déplaçable entre une position rétractée et une position avancée de mesure, ledit capteur étant sensible au contact et à l'absence de contact entre ledit outil (11) et la roue.

21. Tour selon l'une des revendications 16 à 20, caractérisé en ce qu'il comporte, à proximité de l'outil de reprofilage (5), un outil d'écrêtage de boudin.
